# EUROPÄISCHE PATENTSCHRIFT

(11) **EP 2 798 294 B1**
(45) Veröffentlichungstag und Bekanntmachung des Hinweises auf die Patenterteilung: **01.05.2019**
(21) Anmeldenummer: 12810129.2
(22) Anmeldetag: 03.12.2012
(51) Int. Cl.: F27B 3/08, F27B 3/10, F27B 14/06, F27B 14/08, F27B 19/04, F27D 27/00, C22B 9/18, C22B 15/00

(54) **VERFAHREN ZUR GEWINNUNG EINES METALLS AUS EINER DAS METALL ENTHALTENDEN SCHLACKE SOWIE VORRICHTUNG ZUR GEWINNUNG DES METALLS**
METHOD FOR RECOVERING A METAL FROM A SLAG CONTAINING THE METAL AND DEVICE FOR RECOVERING SAID METAL
PROCÉDÉ D'OBTENTION D'UN MÉTAL À PARTIR DE LAITIER CONTENANT CE MÉTAL ET DISPOSITIF CORRESPONDANT

(30) Priorität: 29.12.2011 DE 102011090072
(43) Veröffentlichungstag der Anmeldung: 05.11.2014
(73) Patentinhaber: SMS group GmbH, 40237 Düsseldorf (DE)
(72) Erfinder: KÖNIG, Roland, 45472 Mülheim a. d. Ruhr (DE); WEYER, Axel, 42349 Wuppertal (DE); SCHMIDL, Jürgen, 21043 Hamburg (DE); ZERVOS, Johannes, 20257 Hamburg (DE)
(74) Vertreter: Klüppel, Walter
(86) Internationale Anmeldenummer: PCT/EP2012/074201
(87) Internationale Veröffentlichungsnummer: WO 2013/098044

(56) Entgegenhaltungen:
- WO-A1-2008/052690
- CN-A- 102 288 028
- CN-Y- 201 300 197
- DE-A1-102008 058 605
- GB-A- 1 245 532
- US-A- 3 409 726

## Beschreibung

### Technisches Gebiet

Die vorliegende Erfindung betrifft ein Verfahren zur Gewinnung eines Metalls aus einer das Metall enthaltenden Schlacke, sowie eine Vorrichtung zur Gewinnung des Metalls.

### Stand der Technik

Es ist bekannt, Metalle aus Schlacken zu gewinnen, die das jeweilige Metall enthalten. Hierzu werden die Schlacken verflüssigt und in mindestens einem Lichtbogenofen erhitzt.

Beispielsweise werden beim Erschmelzen von Kupferkonzentraten Kupferstein und Schlacke erzeugt. Die erzeugte Schlacke enthält Kupfer sowohl in gelöster Form als auch in Form von mechanisch übergegangenen Steineinschlüssen. Zur Reinigung der Schlacke bzw. zur Gewinnung des Kupfers aus der Schlacke gibt es zwei wesentliche Verfahren, nämlich die Schlackeflotation nach dem Abschrecken, Zerkleinern und Mahlen der Schlacke, und die pyrometallurgische Reduktion der flüssigen Schlacke.

Zur pyrometallurgischen Schlackenreinigung bzw. Gewinnung des Metalls bzw. Kupfers aus der Schlacke sind zumindest drei unterschiedliche Verfahren bekannt, nämlich
(1.) in einem Wechselstromlichtbogenofen durch Reduktion mit Koks und Elektroden, Schlackevorwärmung und Sedimentation,
(2.) in horizontalen zylindrischen Drehöfen durch Eindüsung eines Reduktionsmittels, zum Beispiel in einem Teniente-Schlackenreinigungsofen,
(3.) in einem vertikalen Konverter mit Eindüsung eines Reduktionsmittels, zum Beispiel TBRC oder Isasmelt.

In der WO 2006/131372 A1 wird in diesem Zusammenhang vorgeschlagen, einen ersten Ofen und einen zweiten Ofen vorzusehen, wobei der erste Ofen als Wechselstromelektroofen ausgebildet ist und der zweite Ofen als Gleichstromofen ausgebildet ist. In dem Gleichstromofen wird die Schmelze elektromagnetisch gerührt, was durch mindestens einen Elektromagneten erreicht wird, welcher in den Seitenbereichen des Gleichstromofens angeordnet ist. Die magnetischen Feldlinien stehen zur Stromflussrichtung der Gleichstromofenelektroden zumindest bezüglich einiger der stromführenden Elemente rechtwinklig. Entsprechend wird eine Lorentzkraft erzeugt, die den elektromagnetischen Rühreffekt hervorruft.

Gemäß diesem Stand der Technik wird entsprechend eine zweistufige Schlackenreduktion und die Entfernung des Kupfers in zwei Lichtbogenöfen vorgeschlagen. Der Wechselstromlichtbogenofen, der als erster Ofen ausgebildet ist, dient der Vorabreduktion der Schlacke und der Abscheidung von Kupferstein, wobei der Gleichstromreduktionsrinnenofen eine tiefergehende Schlackenreduktion und das Entfernen von Einschlüssen unter elektromagnetischem Rühren ausführt.

Aus der WO 2006/131371 A1 ist ein Verfahren zur Reduktion und/oder Reinigung einer ein Metall enthaltenden Schlacke beschrieben.

Die genannten Verfahren bzw. Vorrichtungen ergeben bereits eine sehr hohe Ausbeute an abgeschiedenem Metall, insbesondere abgeschiedenem Kupfer.

Insbesondere wird das in der Schlacke enthaltene Metall gut abgereichert. US-A 3 409 726 offenbart eine Anordnung zur Erzeugung einer Badbewegung durch Elektromagneten in Metallschmelzen. Die Polarität des Erregerstromes des Elektromagnets kann von Zeit zu Zeit mit Hilfe eines Umschalters umgekehrt werden, um die Rührwirkung des Schmelze zu erhöhen.

GB 1 245 432 bezieht sich auf eine Anordnung zum elektromagnetischen Umrühren von Metallschmelzen. Beide Umrührer sind über Umschalter mit der Stromquelle, so dass die Phasenfolge in jedem Umrührer unabhängig von anderer geändert werden kann.

### Darstellung der Erfindung

Dennoch ist es eine Aufgabe der vorliegenden Erfindung, die die Gewinnung eines Metalls aus einer das Metall enthaltenden Schlacke noch effizienter zu gestalten.

Diese Aufgabe wird mittels eines Verfahrens mit den Merkmalen des Anspruchs 1 gelöst. Vorteilhafte Ausgestaltungen ergeben sich aus den Unteransprüchen.

Entsprechend wird in dem Verfahren zur Gewinnung eines Metalls aus einer das Metall enthaltenden Schlacke die metallhaltige Schlacke in mindestens einem Rührreaktor erhitzt und die flüssige Schlacke im Rührreaktor mittels eines entsprechend gerichteten Magnetfelds gerührt. Erfindungsgemäß wird die Schlacke periodisch durch periodischen Ein- und Ausschalten des Magnetfelds gerührt, wobei das Magnetfeld in einer Periode von 5 Sekunden bis 5 Minuten ein- und dann wieder ausgeschaltet wird.

Es hat sich herausgestellt, dass die Ausbeute bzw. die Abreicherung des Metalls in der Schlacke deutlich verbessert werden kann, wenn die Schlacke mittels des Magnetrührers nur periodisch gerührt wird, und entsprechend keine kontinuierliche Rührung der flüssigen Schlacke stattfindet. Insbesondere wird durch das periodische Rühren, also beispielsweise ein pulsierendes Rühren und/oder ein Umkehren der Rührrichtung, eine deutlich impulsivere Strömung der Schlacke im Bereich der Elektroden erreicht. Hierdurch ergibt sich eine verstärkte Koagulation und ein entsprechend späteres Absetzen der Partikel, wodurch die Effizienz der Abreicherung des Metalls weiter verbessert werden kann. Durch das periodische Rühren ergibt sich eine Impulswirkung auf die flüssige Schlacke, welche die oben genannten Effekte bewirkt.

Entsprechend wird durch das periodische Rühren der Schlacke eine verbesserte Koagulation der Partikel und damit in Folge eine Verbesserung des Absetzens erreicht.

Laut der Erfindung wird das Magnetfeld zum periodischen Rühren der Schlacke periodisch ein- und ausgeschaltet. In der Ausbildung des Verfahrens wird das Magnetfeld in einer Periode von 5 Sekunden bis 5 Minuten, bevorzugt zwischen 10 Sekunden und 3 Minuten, noch bevorzugter zwischen 50 Sekunden und 1½ Minuten, besonders bevorzugt jede Minute ein- und dann wieder ausgeschaltet. Die Einschaltzeit kann dabei genauso lang sein, wie die Ausschaltzeit. Diese Zeiten können aber auch unterschiedlich lang sein und die Einschaltzeit kann länger sein als die Ausschaltzeit, und bevorzugt eine Einschaltzeit von 1 Minute und eine Ausschaltzeit von 10 Sekunden aufweisen.

Zumindest kann durch eine An- und Abschaltung bzw. Umpolung des Magnetfeldes der Rührvorrichtung, beispielsweise im Minutentakt, erreicht werden, dass die Koagulation der Partikel verbessert wird und damit die jeweiligen Partikel sich später erst absetzen und dadurch die Ausbeute an abgeschiedenem Metall aus der Schlacke noch deutlich gegenüber den bekannten Verfahren verbessert wird.

In einer bevorzugten Weiterbildung oder Alternative wird das Magnetfeld zum Rühren der Schlacke periodisch umgepolt. Das Umpolen des Magnetfelds kann alle 5 Sekunden bis 5 Minuten, bevorzugt alle 10 Sekunden bis 3 Minuten, noch bevorzugter alle 50 Sekunden bis 1½ Minuten, besonders bevorzugt jede Minute durchgeführt werden. Bevorzugt sind die Betriebszeiten in der jeweiligen Magnetfeldrichtung gleich lang. Es können aber auch unterschiedlich lange Zeiten verwendet werden.

In einer bevorzugten Weiterbildung wird eine Pause zwischen den jeweiligen Umpolungen des Magnetfeldes eingehalten, bevorzugt eine Pause von 5 Sekunden bis 5 Minuten, bevorzugt zwischen 10 Sekunden und 3 Minuten, noch bevorzugter zwischen 50 Sekunden und 1½ Minuten, besonders bevorzugt von 10 Sekunden.

Auch durch das Umpolen des Magnetfelds kann eine impulsivere Geschwindigkeitsverteilung der Partikel in der Schmelze erreicht werden und dadurch ein vorteilhaftes Koagulationsverhalten und späteres Absetzen der Partikel, was zu einer höheren Ausbeute bzw. Abreicherung des Metalls in der Schlacke führt.

Bevorzugt wird die Schlacke in einem als Reduktionsofen mit veränderlichem Magnetfeld ausgeführten Rührreaktor, bevorzugt einem Gleichstromelektroofen, besonders bevorzugt in Rinnenform oder mit Pfannentransport, oder einem Wechselstromofen, bevorzugt mit in niedriger Frequenz alternierendem Magnetfeld, erhitzt.

Eine Vorrichtung zur Gewinnung eines Metalls aus einer das Metall enthaltenden Schlacke mit den Merkmalen des Anspruchs 10 löst ebenfalls die oben gestellte Aufgabe. Vorteilhafte Ausgestaltungen ergeben sich aus den Unteransprüchen.

Die Vorrichtung zur Gewinnung eines Metalls aus einer das Metall enthaltenden Schlacke umfasst einen Rührreaktor zur Erhitzung der metallhaltigen Schlacke und einen Elektromagneten zur Erzeugung eines Magnetfeldes derart, dass die flüssige Schlacke gerührt wird. Erfindungsgemäß ist eine Schaltvorrichtung zum periodischen Betrieb des Elektromagneten vorgesehen.

Mittels der Schaltvorrichtung zum periodischen Betrieb können die oben bereits beschriebenen vorteilhaften Effekte erreicht werden, wenn die Schlacke periodisch gerührt wird. Insbesondere lässt sich so eine verbesserte Abreicherung des Metalls in der Schlacke erreichen.

Die Schaltvorrichtung zum periodischen Betrieb kann in Form eines Umschalters und/oder in Form eines Zeitschalters für den Elektromagneten vorliegen. Auf diese Weise ergibt sich eine einfache Konstruktion der Vorrichtung, die eine einfache Nachrüstung bereits bestehender Anlagen erlaubt, da lediglich die Steuerung der Stromzufuhr modifiziert werden muss.

Um eine effiziente Rührung der Schlacke zu erreichen, ist der Elektromagnet bevorzugt so angeordnet, dass das Magnetfeld Komponenten senkrecht zum Gleichstromfeld des Gleichstromelektroofens aufweist, wobei das Magnetfeld bevorzugt vollständig senkrecht zum Gleichstromfeld ausgerichtet ist.

Der Rührreaktor ist bevorzugt als Reduktionsofen mit veränderlichem Magnetfeld ausgebildet, bevorzugt als Gleichstromelektroofen, besonders bevorzugt als Rührreaktor in Rinnenform oder mit Pfannentransport, oder als Wechselstromofen ausgebildet ist, bevorzugt mit in niedriger Frequenz alternierendem Magnetfeld.

### Kurze Beschreibung der Figuren

Bevorzugte weitere Ausführungsformen und Aspekte der vorliegenden Erfindung werden durch die nachfolgende Beschreibung der Figuren näher erläutert.
- Figur 1: zeigt schematisch einen Wechselstromlichtbogenofen mit einem nachgeschalteten Rührreaktor,
- Figur 2: zeigt eine geschnittene Vorderansicht des Rührreaktors,
- Figur 3: zeigt schematisch eine Simulation der Geschwindigkeitsverteilung der Partikel im Rührreaktor bei periodischer Rührung der Schlacke, und
- Figur 4: zeigt schematisch eine Simulation der Geschwindigkeitsverteilung der Partikel in einem herkömmlichen Rührreaktor mit Magnetrührung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird teilweise verzichtet, um Redundanzen in der Beschreibung zu vermeiden.

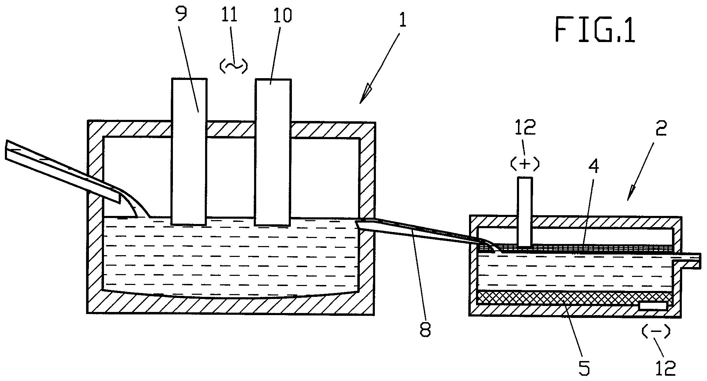

In Figur 1 ist beispielhaft für einen Schmelzofen ein erster Ofen in Form eines Wechselstromofens 1 zu sehen, welcher zwei Elektroden 9 und 10, beispielsweise in Form von Graphitelektroden, aufweist. Die Elektroden 9, 10 sind an eine Wechselstromquelle 11 angeschlossen. Der Wechselstromofen 1 dient dazu, die das zu gewinnende Metall enthaltende Schlacke zu verflüssigen. Der vorgeschaltete Schmelzofen kann in unterschiedlichen Ausführungen ausgebildet werden und kann beispielsweise als Gleichstromofen oder als Wechselstromofen ausgebildet sein und mit 1 bis 6 Elektroden oder gar bis zu 9 Elektroden ausgebildet werden.

Die im Wechselstromofen 1 entsprechend vorbereitete Schmelze aus der Metallschlacke wird über eine Schmelzrinne 8 in einen zweiten Ofen eingeleitet. Der zweite Ofen ist als Gleichstromofen 2 ausgebildet. Als Alternative zur Schmelzrinne 8 kann auch ein Pfannentransport verwendet werden.

In dem Gleichstromofen 2 befinden sich zwei Elektroden 4 und 5, welche über Kontaktelektroden, beispielsweise Graphitkontaktelektroden, mit einer Gleichstromquelle 12 gekoppelt sind. Die Elektrode 4 ist eine Koksschicht, welche als Anode dient. Die Elektrode 5 ist als plattenartige Metallelektrode und als Kathode ausgebildet. Die obere, horizontal angeordnete Elektrode 4 ist mit dem Pluspol der Gleichstromquelle 12 verbunden und dient entsprechend als Anode. Die untere, ebenfalls horizontal angeordnete Elektrode 5 ist über eine Bodenelektrode mit dem Minuspol der Gleichstromquelle 12 verbunden und dient entsprechend als Kathode des Gleichstromofens 2. In einer Variante kann der Gleichstromofen auch anders herum gepolt werden.

Das Metall wird aus der flüssigen Schlacke entsprechend über einen elektrolytischen Prozess gewonnen.

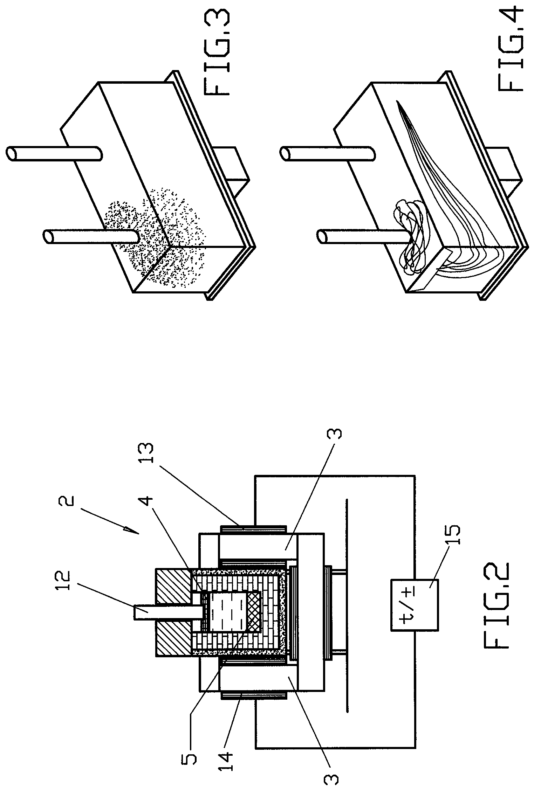

Wie sich aus Figur 2 ergibt, welche eine schematische Schnittdarstellung des in Figur 1 gezeigten Gleichstromofens 2 ist, sind wieder die plattenförmigen Elektroden 4, 5 vorgesehen, welche entsprechend an die Wechselstromquelle 12 angeschlossen sind.

Weiterhin sind seitlich entlang des Rinnenofens elektrische Spulen ausgebildet, welche um Metallkerne 3 herum gewickelt sind und entsprechend Elektromagnete 13 und 14 ausbilden. Da das von den Elektromagneten 13 und 14 erzeugte Magnetfeld im Wesentlichen senkrecht zu dem von den Elektroden 4 und 5 erzeugten Gleichstromfeld liegt, wird hier entsprechend eine Lorentzkraft erzeugt, welche auf die entsprechenden Metallpartikel so wirkt, dass die sich im Rinnenofen befindliche Schlacke entsprechend bewegt. Hierdurch wird ein elektromagnetischer Rühreffekt erzeugt, welcher die Schmelze in dem Gleichstromofen 2 rührt.

Eine Schaltvorrichtung 15 zum periodischen Betrieb der Elektromagnete 13 und 14 bzw. des sich daraus ergebenden magnetischen Feldes ist vorgesehen. Die Schaltvorrichtung 15 zum periodischen Betrieb weist einen Zeitschalter auf, um die Elektromagnete 13 und 14 periodisch mit Spannung zu beaufschlagen und diese dann wieder abzuschalten um dadurch entsprechend die Schlacke periodisch zu rühren. Die Schaltvorrichtung 15 zum periodischen Betrieb weist bevorzugt auch einen Umschalter auf, mittels welchem die Richtung des durch die Elektromagnete 13 und 14 erzeugten Magnetfeldes umgepolt werden kann. Bevorzugt findet hier auch eine Kombination statt, also ein periodisches Ein- und Ausschalten mit einem periodischen Umpolen des Magnetfeldes. Entsprechend wird die Schlacke periodisch gerührt. Hierdurch wird eine Impulswirkung auf die Schlacke ausgeübt, welche eine verstärkte Koagulation und ein entsprechend späteres Absetzen der Partikel bewirkt, wodurch die Effizienz der Abreicherung des Metalls weiter verbessert werden kann.

Mittels der Schaltvorrichtung 15 zum periodischen Betrieb wird entsprechend erreicht, dass die sich in dem Gleichstromofen 2 befindliche Schlacke periodisch gerührt wird. Unter periodischem Rühren wird hier verstanden, dass das Magnetfeld nicht kontinuierlich betrieben wird, sondern in bestimmten Schaltmustern betrieben wird. Beispielsweise wird das Magnetfeld periodisch ein- und ausgeschaltet, also beispielsweise für eine Zeit von 1 Minute eingeschaltet, um dann wieder 1 Minute lang abgeschaltet zu sein. Selbstverständlich können auch jegliche anderen Zeitabschnitte, die zwischen 5 Sekunden und 5 Minuten Betrieb und Abschaltung betragen verwendet werden. Die tatsächlich verwendeten Schaltzeiten werden bevorzugt berechnet und/oder experimentell bestimmt.

Bevorzugt ist auch, die jeweiligen abgeschalteten Perioden kürzer zu halten, als die Betriebsperioden oder aber die Betriebsperioden kürzer zu halten als die Ausschaltperioden, jeweils um ein entsprechendes Koagulieren der Partikel und ein darauf folgendes Absetzen der Partikel je nach Beschaffenheit der Schlacke und je nach Materialbeschaffenheit des jeweiligen Metalls zu erreichen.

In einem alternativen oder ergänzenden Ausführungsbeispiel wird das Magnetfeld periodisch umgepolt, also beispielsweise einmal pro Minute, oder aber in jeglichem anderen Zeitabschnitt, welcher für die jeweilige bearbeitete Schlacke bzw. das jeweilige bearbeitete Metall vorteilhaft ist. Zwischen den einzelnen Umpolungen des Magnetfeldes können bevorzugt auch Pausen eingelegt werden, die bevorzugt in einem Bereich von 5 Sekunden bis 5 Minuten liegen können. In einem besonders bevorzugten Ausführungsbeispiel werden 10 Sekunden Pause von 1 Minute Rühren gefolgt.

Die jeweiligen Rührperioden und Abschaltperioden können symmetrisch zueinander aufgebaut sein, also beispielsweise 1 Minute rühren und 1 Minute ruhen, oder sie können asymmetrisch ausgebildet sein, also beispielsweise 1 Minute rühren und 30 Sekunden ruhen bzw. 30 Sekunden rühren und 1 Minute ruhen. Auch komplexere Abläufe mit variierenden Zeiten sind denkbar.

Figur 3 zeigt schematisch eine Darstellung der in der flüssigen Schlacke vorhandenen Partikelbewegung bei Vorliegen eines periodischen Rührens, also eines periodischen Ein- und Ausschaltens des Magnetfeldes bzw. eines periodischen Umpolens, bzw. einer Kombination hieraus.

Im Vergleich hierzu zeigt Figur 4 eine Simulation bei gleichen Parametern bezüglich des Gleichstromfeldes und des Magnetfeldes, wobei jedoch das Magnetfeld konstant betrieben wird und entsprechend ein über die Zeit hinweg konstantes Rühren stattfindet.

Aus dem Vergleich der Figuren 3 und 4 ergibt sich sofort, dass die Geschwindigkeitsverteilung in der periodisch gerührten Schlacke wesentlich dynamischer ist und deutlich impulsivere Strömungen der flüssigen Schlacke im Bereich des Magneten mit sich bringt, als beim konstanten Rühren.

Es hat sich ergeben, dass hierdurch eine verstärkte Koagulierung der jeweiligen metallischen Partikel erreicht werden kann und die metallischen Partikel sich auch erst später absetzen, wodurch ebenfalls ein verbessertes Koagulationsverhalten erreicht wird.

Durch das periodisch gesteuerte bzw. pulsierende Rühren wird, beispielsweise bei der Verwendung im Bereich von Kupferschlacken, ein Endkupfergehalt der Schlacke von durchschnittlich 0,5%, bis zu 0,3% erreicht, also eine nahezu vollständige Abreicherung des jeweiligen Metalls aus der metallhaltigen Schlacke.

### Bezugszeichenliste

- 1: Wechselstromofen
- 2: Gleichstromofen
- 3: Metallkern des Elektromagneten
- 4: Elektrode (Anode)
- 5: Elektrode (Katode)
- 8: Schmelzrinne
- 9: Elektrode
- 10: Elektrode
- 11: Wechselstromquelle
- 12: Gleichstromquelle
- 13: Elektromagnet
- 14: Elektromagnet
- 15: Schaltvorrichtung zum periodischen Betrieb

## Patentansprüche

1. Verfahren zur Gewinnung eines Metalls aus einer das Metall enthaltenden Schlacke, bei dem die metallhaltige Schlacke in mindestens einem Rührreaktor (2) erhitzt wird und die flüssige Schlacke im Rührreaktor (2) mittels eines entsprechend gerichteten Magnetfelds gerührt wird,
**dadurch gekennzeichnet, dass**
die Schlacke durch periodisches Ein- und Ausschalten des Magnetfelds zum Rühren der Schlacke periodisch gerührt wird, wobei das Magnetfeld in einer Periode von 5 Sekunden bis 5 Minuten ein- und dann wieder ausgeschaltet wird.

2. Verfahren gemäß Anspruch 1, wobei das Magnetfeld in einer Periode zwischen 10 Sekunden und 3 Minuten, bevorzugter zwischen 50 Sekunden und 1½ Minuten, besonders bevorzugt jede Minute ein- und dann wieder ausgeschaltet wird.

3. Verfahren gemäß Anspruch 2, wobei die Einschaltzeit genauso lang ist, wie die Ausschaltzeit.

4. Verfahren gemäß Anspruch 2, wobei die Einschaltzeit länger ist als die Ausschaltzeit, und bevorzugt die Einschaltzeit 1 Minute und die Ausschaltzeit 10 Sekunden ist.

5. Verfahren gemäß einem der vorstehenden Ansprüche, wobei das Magnetfeld zum Rühren der Schlacke periodisch umgepolt wird.

6. Verfahren gemäß Anspruch 5, wobei das Magnetfeld alle 5 Sekunden bis 5 Minuten, bevorzugt alle 10 Sekunden bis 3 Minuten, noch bevorzugter alle 50 Sekunden bis 1½ Minuten, besonders bevorzugt jede Minute umgepolt wird.

7. Verfahren gemäß Anspruch 6, wobei die Betriebszeiten in der jeweiligen Magnetfeldrichtung gleich lang sind.

8. Verfahren gemäß Anspruch 6 und Anspruch 7, wobei eine Pause zwischen den jeweiligen Umpolungen des Magnetfeldes eingehalten wird, bevorzugt eine Pause von 5 Sekunden bis 5 Minuten, bevorzugt zwischen 10 Sekunden und 3 Minuten, noch bevorzugter zwischen 50 Sekunden und 1½ Minuten, besonders bevorzugt von einer Minute.

9. Verfahren gemäß einem der vorstehenden Ansprüche, wobei die Schlacke in einem als Reduktionsofen mit veränderlichem Magnetfeld ausgeführten Rührreaktor (2), bevorzugt einem Gleichstromelektroofen, besonders bevorzugt in Rinnenform oder mit Pfannentransport, oder einem Wechselstromofen, bevorzugt mit in niedriger Frequenz alternierendem Magnetfeld, erhitzt wird.

10. Vorrichtung zur Gewinnung eines Metalls aus einer das Metall enthaltenden Schlacke, umfassend einen Rührreaktor (2) zur Erhitzung der metallhaltigen Schlacke und einen Elektromagneten (13, 14) zur Erzeugung eines Magnetfeldes derart, dass die flüssige Schlacke mittels des Magnetfelds im Rührreaktor (2) gerührt wird,
**dadurch gekennzeichnet, dass**
eine Schaltvorrichtung (15) zum periodischen Betrieb des Elektromagneten (13, 14) vorgesehen ist, die zum periodischen Betrieb des Elektromagneten (13, 14) einen Zeitschalter aufweist, um den Elektromagneten (13, 14) periodisch mit Spannung zu beaufschlagen und diese dann wieder abzuschalten, so dass das Magnetfeld in einer Periode von 5 Sekunden bis 5 Minuten ein- und dann wieder ausgeschaltet wird.

11. Vorrichtung gemäß Anspruch 10, wobei die Schaltvorrichtung (15) zum periodischen Betrieb einen Umschalter aufweist, mittels dem die Richtung des durch den Elektromagneten (13, 14) erzeugten Magnetfeldes umgepolt werden kann.

12. Vorrichtung gemäß Anspruch 10 oder 11, wobei der Elektromagnet (13, 14) so angeordnet ist, dass das Magnetfeld Komponenten senkrecht zum Feld des Rührreaktors (2) aufweist, wobei das Magnetfeld bevorzugt vollständig senkrecht zum Feld des Rührreaktors (2) ausgerichtet ist.

13. Vorrichtung gemäß einem der Ansprüche 10 bis 12, wobei der Rührreaktor (2) als Reduktionsofen mit veränderlichem Magnetfeld ausgebildet ist, bevorzugt als Gleichstromelektroofen, besonders bevorzugt als Rührreaktor in Rinnenform oder mit Pfannentransport, oder als Wechselstromofen ausgebildet ist, bevorzugt mit in niedriger Frequenz alternierendem Magnetfeld.

## Claims

1. Method of recovering a metal from a slag containing the metal, in which the slag with metal content is heated in at least one stirring tank reactor (2) and in which the liquid slag in the stirring tank reactor (2) is stirred by means of an appropriately directed magnetic field,
**characterised in that**
the slag is stirred periodically by periodic switching on and off of the magnetic field for stirring the slag, wherein the magnetic field is switched on and then off again in a period of 5 seconds to 5 minutes.

2. Method according to claim 1,wherein the magnetic field is switched on and then off again in a period of preferably between 10 seconds and 3 minutes, more preferably between 50 seconds and 1½ minutes, particularly preferably every minute.

3. Method according to claim 2, wherein the switch-on time is just as long as the switch-off time.

4. Method according to claim 2, wherein the switch-on time is longer than the switch-off time and the switch-on time is preferably 1 minute and the switch-off time preferably 10 seconds.

5. Method according to any one of the preceding claims, wherein the magnetic field for stirring the slag is reversed in polarity periodically.

6. Method according to claim 5, wherein the magnetic field is reversed in polarity every 5 seconds to 5 minutes, preferably every 10 seconds to 3 minutes, more preferably every 50 seconds to 1½ minutes, particularly preferably every minute.

7. Method according to claim 6, wherein the operating times in the respective magnetic field direction are of equal length.

8. Method according to claim 6 and claim 7, wherein a pause is maintained between the respective reversals of polarity of the magnetic field, preferably a pause of 5 seconds to 5 minutes, preferably between 10 seconds and 3 minutes, even more preferably between 50 seconds and 1½ minutes, particularly preferably of a minute.

9. Method according to any one of the preceding claims, wherein the slag is heated in a stirring tank reactor (2) constructed as a reduction furnace with variable magnetic field, preferably a direct current electric furnace, particularly preferably in channel form or with ladle transport, or an alternating current furnace, preferably with a magnetic field alternating at low frequency.

10. Device for recovering a metal from a slag containing the metal, comprising a stirring tank reactor (2) for heating the slag with metal content and an electromagnet (13, 14) for producing a magnetic field so that the liquid slag is stirred by means of the magnetic field in a stirring tank reactor,
**characterised in that**
a switching device (15) for periodic operation of the electromagnet (13, 14) is provided, which has for periodic operation of the electromagnet (13, 14) a time switch to periodically act on the electromagnet (13, 14) by voltage and to then switch this off again so that the magnetic field is switched on and then switched off again in a time period of 5 seconds to 5 minutes.

11. Device according to claim 10, wherein the switching device (15) for periodic operation comprises a changeover switch by means of which the direction of the magnetic field generated by the electromagnet (13, 14) can be reversed in polarity.

12. Device according to claim 10 or 11, wherein the electromagnet (13, 14) is so arranged that the magnetic field has components perpendicular to the field of the stirring tank reactor (2), wherein the magnetic field is preferably directed entirely perpendicularly to the field of the stirring tank reactor (2).

13. Device according to any one of claims 10 to 12, wherein the stirring tank reactor (2) is constructed as a reduction furnace with variable magnetic field, preferably as a direct current electric furnace, particularly preferably as a stirring reactor in channel form or with ladle transport, or as an alternating current furnace, preferably with a magnetic field alternating at low frequency.

## Revendications

1. Procédé pour la production d'un métal à partir d'un laitier contenant le métal, dans lequel le laitier contenant le métal est chauffé dans au moins un réacteur d'agitation (2) et le laitier liquide est agité dans le réacteur d'agitation (2) au moyen d'un champ magnétique orienté de manière correspondante, **caractérisé en ce que** le laitier est agité de manière périodique via une mise en service et une mise hors service périodique du champ magnétique pour l'agitation du laitier ; dans lequel le champ magnétique est mis en service et est ensuite remis hors service dans un laps de temps de 5 secondes à 5 minutes.

2. Procédé selon la revendication 1, dans lequel le champ magnétique est mis en service et est ensuite remis hors service dans un laps de temps entre 10 secondes et 3 minutes, de préférence entre 50 secondes et 1½ minute, de manière particulièrement préférée chaque minute.

3. Procédé selon la revendication 2, dans lequel la durée de la mise en service est exactement aussi longue que la durée de la mise hors service.

4. Procédé selon la revendication 2, dans lequel la durée de la mise en service est plus longue que la durée de la mise hors service, et de préférence la durée de la mise en service est de 1 minute et la durée de la mise hors service est de 10 secondes.

5. Procédé selon l'une quelconque des revendications précédentes, dans lequel la polarité du champ magnétique est inversée de manière périodique pour l'agitation du laitier.

6. Procédé selon la revendication 5, dans lequel la polarité du champ magnétique est inversée toutes les 5 secondes à 5 minutes, de préférence toutes les 10 secondes à 3 minutes, de manière encore plus préférée toutes les 50 secondes à 1½ minute, de manière particulièrement préférée chaque minute.

7. Procédé selon la revendication 6, dans lequel les temps de fonctionnement dans la direction respective du champ magnétique sont de longueur égale.

8. Procédé selon la revendication 6 et la revendication 7, dans lequel une pause est respectée entre les inversions de polarisation respectives du champ magnétique, de préférence une pause de 5 secondes à 5 minutes, de préférence entre 10 secondes et 3 minutes, de manière encore plus préférée entre 50 secondes et 1½ minute, de manière particulièrement préférée chaque minute.

9. Procédé selon l'une quelconque des revendications précédentes, dans lequel le laitier est réchauffé dans un réacteur d'agitation (2) réalisé sous la forme d'un four à réduction comprenant un champ magnétique variable, de préférence sous la forme d'un four électrique à courant continu, de manière particulièrement préférée sous la forme d'un four du type à canal ou équipé d'un transport de poches, ou sous la forme d'un four à courant alternatif, de préférence comprenant un champ magnétique alternatif à basse fréquence.

10. Dispositif pour la production d'un métal à partir d'un laitier contenant le métal, comprenant un réacteur d'agitation (2) pour le réchauffement du laitier contenant un métal, ainsi qu'un électroaimant (13, 14) pour la production d'un champ magnétique d'une manière telle que le laitier liquide est agité dans le réacteur d'agitation (2) au moyen du champ magnétique, **caractérisé en ce qu'**on prévoit un dispositif de commutation (15) pour l'exploitation périodique de l'électroaimant (13, 14), qui présente une minuterie pour l'excitation périodique de l'électroaimant (13, 14) avec une tension et pour mettre ensuite ce dernier à nouveau hors circuit d'une manière telle que le champ magnétique est mis en circuit et est ensuite remis hors circuit dans un laps de temps de 5 secondes à 5 minutes.

11. Dispositif selon la revendication 10, dans lequel le dispositif de commutation (15) présente un commutateur pour l'exploitation périodique, au moyen duquel on peut inverser la polarité de la direction du champ magnétique généré par l'électroaimant (13, 14).

12. Dispositif selon la revendication 10 ou 11, dans lequel l'électroaimant (13, 14) est disposé d'une manière telle que le champ magnétique présente des composantes s'étendant perpendiculairement au champ du réacteur d'agitation (2) ; dans lequel, le champ magnétique est orienté de préférence dans une direction complètement perpendiculaire par rapport au champ du réacteur d'agitation (2).

13. Dispositif selon l'une quelconque des revendications 10 à 12, dans lequel le réacteur d'agitation (2) est réalisé sous la forme d'un four à réduction comprenant un champ magnétique variable, de préférence sous la forme d'un four électrique à courant continu, de manière particulièrement préférée sous la forme d'un four du type à canal ou équipé d'un transport de poches, ou sous la forme d'un four à courant alternatif, de préférence comprenant un champ magnétique alternatif à basse fréquence.
